# EUROPÄISCHE PATENTSCHRIFT

(11) **EP 0 424 746 B1**
(45) Veröffentlichungstag und Bekanntmachung des Hinweises auf die Patenterteilung: **21.12.1994**
(21) Anmeldenummer: 90119554.5
(22) Anmeldetag: 12.10.1990
(51) Int. Cl.: H02G 15/013, H02G 9/06, H02G 3/04

(54) **Vorrichtung für den druckdichten Abschluss der Mündung eines Hohlkörpers**
Pressure-resistant sealing device for the opening of a hollow body
Dispositif pour la fermeture étanche à la pression de l'entrée d'un corps creux

(30) Priorität: 27.10.1989 DE 3935806
(43) Veröffentlichungstag der Anmeldung: 02.05.1991
(73) Patentinhaber: REHAU AG + Co, 95111 Rehau (DE)
(72) Erfinder:

(56) Entgegenhaltungen:
- EP-A- 0 073 748
- DE-A- 3 102 710
- FR-A- 2 494 051

## Beschreibung

Die Neuerung betrifft eine Vorrichtung für den druckdichten Abschluß der Mündung eines Hohlkörpers, vorzugsweise eines Kabelschutzrohres mit einem zylindrischen, in die Rohrmündung einsetzbaren Dichtungsteil aus elastischem Werkstoff, wobei das Dichtungsteil wenigstens eine Durchgangsöffnung und einen bis zu dieser Durchgangsöffnung verlaufenden Einschnitt für das Einsetzen und die Aufnahme eines Kabels aufweist, und wobei an beiden Stirnseiten des Dichtungsteils Druckplatten angeordnet sind, weiche über Andruckelemente das Dichtungsteil nach außen zur Innenwand des Rohres und nach innen zur Oberfläche des Kabels verpressen.

Ein derartiges Abdichtelement ist aus DE-U 83 35 282 bekannt. Das dort beschriebene Abdichtelement besitzt einen Dichtring aus elastischem Werkstoff mit lamellenartigen Dichtscheiben, die über eine Filmhaut zusammengehalten sind. Über die Abtrennung der einzelnen lamellenartigen Dichtscheiben ist eine Anpassung sowohl an den Kabeldurchmesser als auch an die lichte Weite des Kabelschutzrohres möglich. Der Dichtring des bekannten Standes der Technik ist ferner durch einen schrägen Schnitt aufklappbar und damit um das Kabel legbar gestaltet.

Die beiden Spannscheiben aus hartem Material besitzen sägezahnförmige Eindrehungen, die entsprechend dem Kabel- oder Rohrdurchmesser ausgebrochen werden können. Der Dichtring und die Spannscheiben sind damit an unterschiedliche Außenabmessungen des Kabels sowie Innenabmessungen des Kabelschutzrohres anpaßbar. Die Spannscheiben sind über Exzenterhebel über dem Dichtring verpreßbar, so daß hier nach dem Einsatz des Abdichtelementes in die lichte Weite des Kabelschutzrohres eine gas- und wasserdichte Abdichtung sowohl zur inneren Oberfläche des Schutzrohres als auch zur äußeren Oberfläche des Kabels erzielbar ist.

Die Nachteile der bekannten Anordnung sind in der umständlichen Handhabung zu sehen. So müssen die Spannscheiben an den sägezahnförmigen Eindrehungen aufgebrochen werden. Durch diesen Aufbrechvorgang entstehen scharfe Kanten, die zu Verletzungen des Dichtrings, des Kabels, aber auch des Verlegepersonals führen können. Auch muß der Dichtring selbst durch definiertes Abreißen der Filmhaut, die die einzelnen Lamellen zusammenhält, an die Einlegebedingungen angepaßt werden. Hier können beim Einreißen Fehler auftreten, so daß der ganze Dichtring unbrauchbar werden kann. Letztlich sind die Exzenterhebel, die zwangsläufig im Mündungsbereich des Kabelschutzrohres liegen müssen, durch äußere Einflüsse ungewollt entspannbar, so daß die ursprünglich hergestellte gas- und wasserdichte Abdichtung aufgehoben werden kann.

Ein derartiges Abdichtelement ist ebenfalls aus EP-A-0 073 748 bekannt.

Zur Vermeidung dieser Nachteile hat sich die Neuerung die Aufgabe gestellt, eine Dichtvorrichtung anzugeben, die neben dem Erfordernis der gas- und wasserdichten Abdichtung zwischen der Innenwand des Schutzrohres und dem äußeren Umfang des Kabels für das Verlegepersonal eine einfache Verlegemöglichkeit schafft. Neuerungsgemäß wird hierzu vorgeschlagen, daß das Dichtungsteil aus einer Anzahl ineinandersteckbarer, abgestützter Innendruckringe besteht, welche beidseitig eines Dichtelementes auf dem Kabelumfang angeordnet sind, und daß die Innendruckringe von jeweils einem äußeren Spannring umgeben sind, welche ihrerseits aus je zwei Spannringhälften mit Durchgangsöffnungen für Befestigungselemente bestehen.

Das beim neuerungsgemäßen Aufbau verwendete Dichtelement besteht vorzugsweise aus einem gewickelten Dichtungsband aus elastischem Material, welches nach außen bis zum Außendurchmesser der Spannringe geführt sein kann. Das aus elastischem Material aufgebaute Dichtelement kann wahlweise auch durch einen geteilten, flexiblen Dichtring abgedeckt sein, der innenliegende Einkerbungen zum Übergreifen der Befestigungselemente aufweisen kann. Dieser das Dichtelement abdeckende Dichtring kann aus weichplastischem Polymermaterial bestehen. Letztlich kann die Abdichtung auch ausschließlich durch ein aus weichplastischem Material gefertigtes Dichtelement erfolgen.

Weiterhin bestehen die Innendruckringe zweckmäßigerweise aus geschlitzten Hülsen, welche in den vorgegebenen Durchmesserabstufungen ineinander stecken, wobei die einzelnen Durchmesserabstufungen jeweils einen bundartig umlaufenden Überstand zur Abstützung der einzelnen Hülsen im Hülsenverbund aufweisen.

Die Innendruckringe können auch aus zwei Ringhälften bestehen, wobei jede Ringhälfte an ihren beiden Querschnittsflächen einerseits eine Aufnahmenut und andererseits ein federartiges Rastelement zur Herstellung einer festsitzenden Nut-Feder-Verbindung trägt.

Die Innendruckringe können auch über ein Filmscharnier beweglich aneinander angelenkt sein, wobei die beschriebene Rastverbindungen nur an zwei gegenüberliegenden Querschnittsflächen erfolgt.

Letztlich kann eine ein- oder beidseitig wirkende Scharnierverbindung gewählt werden, wobei unter Druck verrastbare Scharniere eingesetzt werden können.

Bedingt durch diesen Überstand weisen die äußeren Spannringe eine entsprechende, umlaufende Eindrehung zur abstützenden Aufnahme des bundartigen Überstandes des äußeren Innendruckringes auf.

Die Befestingungselemente besitzen an ihren freien Enden Gewindebereiche, auf die nach dem Durchgriff durch die Durchgangsöffnungen der äußeren Spannringe und dem Durchgreifen durch die Öffnungen zweier Gegenstücke Schraubelemente, z.B. Schraubhülsen zur Erzeugung der Anpreßkraft aufbringbar sind. Die Gegenstücke sind dabei vorteilhaft als Anschlagelemente für den Rohrwandquerschnitt mit einem Überstand über den Durchmesser der äußeren Spannringe ausgebildet.

Die Vorteile der neuerungsgemäßen Vorrichtung sind in der einfachen Handhabung zu sehen. So werden zunächst die Innendruckringe derart um das Kabel gelegt, daß zwischen den beiden Druckring-Sätzen ein Stück der freien Kabeloberfläche erhalten bleibt. Die Innendruckringe werden mit ihren geschlitzten Bereichen über das Kabel gesetzt und auf dem Kabel ineinandergesteckt. Begonnen wird bei diesem Vorgang mit dem Innendruckring, der den kleinsten noch möglichen Ringdurchmesser besitzt. Der Aufbau erfolgt dann nach außen bis zu dem Innendruckring mit dem noch größten möglichen Durchmesser.

Danach wird der Zwischenraum zwischen den beiden auf der Kabeloberfläche befindlichen Sätzen der Innendruckringe mit dem Dichtungsband bewickelt. Dieses Dichtungsband kann beispielsweise ein Butylband sein, welches mit einem schrägen oder geraden Bandschnitt auf die Kabeloberfläche aufgelegt wird und nach dem Ende des Aufwickelvorganges am Bandende ebenfalls einen Schräg- oder Geradeschnitt erhält. Das Dichtungsband wird so weit aufgewickelt, bis der Zwischenraum zwischen den beiden Sätzen der Innendruckringe annähernd mit dem Bandmaterial ausgefüllt ist.

Danach werden die äußeren Spannringhälften auf die vom Dichtungsband abgewandten Außenbereiche der beiden Sätze der Innendruckringe aufgebracht und die Befestigungselemente durch die Durchgangsöffnungen der Spannringhälften gesteckt. Danach werden die Gegenstücke über die Gewindebereiche der Befestigungselemente auf diese aufgesteckt und auf die Gewindebereiche der Befestigungselemente die Schraubhülsen aufgedreht. Dieses Aufdrehen der Schraubhülsen geschieht noch ohne Verpressung, so daß ein Einschieben der Vorrichtung in das Lumen des Schutzrohres möglich ist. Vor dem Einschieben in das Schutzrohrlumen wird über die freiliegenden Befestigungselemente im Bereich des gewickelten Dichtungsbandes ggf. ein geteilter Dichtring eingebracht. Dieser Dichtring besitzt innenliegende, axial verlaufende Nuten, in die die über dem gewickelten Dichtungsband freiliegenden Bereiche der Befestigungselemente eingreifen. Der Dichtring ist über einen Schrägschnitt geteilt und die Querschnittsflächen der Schrägschnitte liegen beim Endsitz des Dichtrings aneinander an. Der Dichtring kann in seiner äußeren Oberfläche radial verlaufende Umfangsnuten besitzen, die eine Abdichtung gegen die Innenwand des Schutzrohres erleichtern. Die Schrägschnitte der Dichtelemente bewirken dabei, daß ein axialer Durchgangsweg für ein gasförmiges oder flüssiges Medium, gegen das die Dichtung wirken soll, verhindert wird.

Als letzter Schritt wird der beschriebene Aufbau in das Lumen des Schutzrohres eingesetzt und über die Schraubhülsen verspannt. Mit diesem Verspannungsvorgang werden die beiden Sätze der Innendruckringe über die äußeren Spannringe zusammengedrückt. Die dadurch entstehenden Kräfte wirken auf das gewickelte Dichtungsband genauso ein wie auf den ggf. über diesem Band angeordneten Dichtring.

Das flexible Dichtungsband entwickelt dabei sowohl nach innen als auch nach außen wirkende Preßkräfte. Die inneren Preßkräfte dienen dabei zur gas- und wasserdichten Abdichtung gegen das Kabel, während die äußeren Preßkräfte zur Anpressung des Dichtungsbandes oder des Dichtrings gegen die innere Oberfläche des Schutzrohres dienen. Wird bei der Herstellung der Vorrichtung ein gewickeltes Dichtungsband verwendet, so kann dieses Dichtungsband insofern auf der Oberfläche des Kabels rutschfähig ausgerüstet sein, als auf dieser Oberfläche beispielsweise ein nichtklebendes Material als Oberflächenbeschichtung aufgebracht ist. Auf diese Weise kann eine dichte Verbindung zum Kabel im Schutzrohr erzielt werden, die danach auch wieder ohne großen Aufwand lösbar ist.

In der Zeichnung ist ein Beispiel der neuerungsgemäßen Vorrichtung schematisch dargestellt, es zeigt:
Fig. 1 die einzelnen Phasen des Zusammenbaus
Fig. 2 eine Explosionszeichnung der einzelnen Teile des Dichtelementes

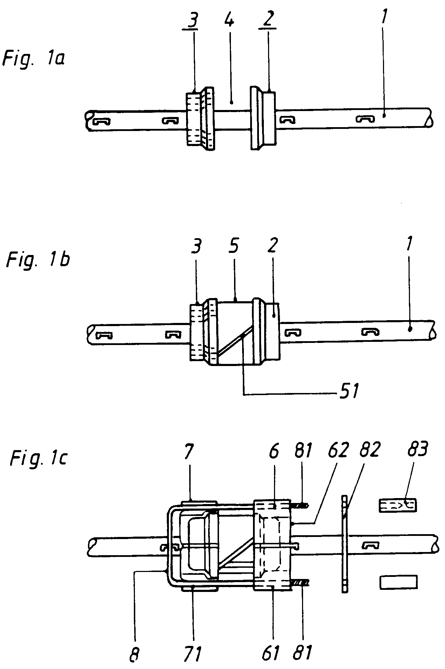

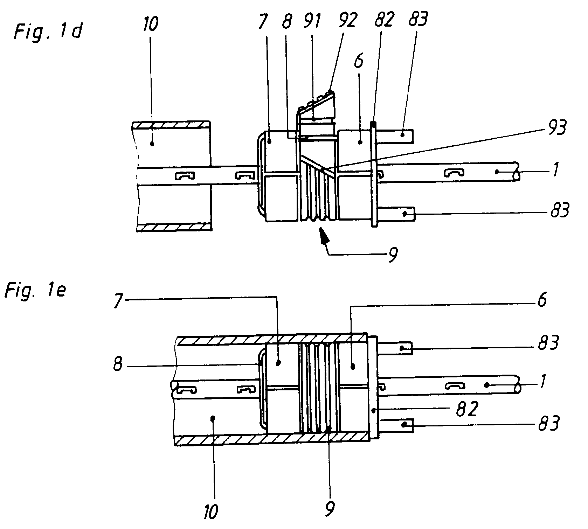

In Fig. 1 sind die einzelnen Phasen des Zusammenbaus des neuerungsgemäßen Dichtelementes dargestellt. Fig. 1 a) zeigt das Kabel 1 mit den beiden Sätzen der Innendruckringe 2, 3. Die Innendruckringe 2, 3 begrenzen den Zwischenraum 4.

Aus Fig. 1 b) ergibt sich, daß in den Innenraum 4 das Dichtungsband 5 derart eingewickelt ist, daß die Ränder des Dichtungsbandes 5 an den zueinandergerichteten Stirnflächen der Innendruckringe 2, 3 anliegen.

Am Dichtungsband 5 ist die außenliegende Schräge 51 ersichtlich.

In Fig. 1 c) sind die äußeren Spannringe 6, 7 auf den äußeren Umfang der Innendruckringe aufgesetzt. Durch die Durchgangsöffnungen 61, 71 der äußeren Spannringe 6, 7 sind die Befestigungselemente 8 derart durchgesteckt, daß deren Gewindebereiche 81 über die Stirnfläche 62 des Spannrings 6 hinausragen. Neben den gezeigten starren Spannbügeln 8 können als Befestigungselemente auch flexible Halterungen wie Seile, Bänder und dergleichen eingesetzt werden. Die Gegenstücke 82 sind in dieser Darstellung noch nicht über die Gewindebereiche 81 der Spannbügel 8 geschoben, auch die Schraubhülsen 83 sind noch nicht auf die Gewindebereiche 81 aufgebracht.

In Fig. 1 d) sind die Gegenstücke 82 und die Schraubhülsen 83 in ihre vorläufige Endstellung gebracht, wobei eine Verpresssung des Dichtelementes noch nicht stattgefunden hat. Auf das gewickelte Dichtungsband ist in der gezeigten Darstellung der flexible Dichtring 9 annähernd vollflächig aufgezogen. Aus der noch hochstehenden Fahne des flexiblen Dichtringes 9 ist die axial verlaufende nutenförmige Einkerbung 9 zu entnehmen, in die der darunter gezeigte Teilbereich des Spannbügels 8 im Endsitz des flexiblen Dichtungsbandes 9 eingreift. Aus dieser Darstellung ersichtlich ist weiter der doppelte Schrägschnitt 92, 93. Beide schrägen Schnittflächen liegen beim Endsitz des flexiblen Dichtringes aneinander an, wodurch die Dichtwirkung vergrößert wird. Das hergestellte Dichtelement ist bei dieser Darstellung vor dem Einsatz in das Lumen des Kabelschutzrohres 10 gezeigt.

Fig. 1 e) zeigt schließlich das eingesetzte Dichtelement in das Lumen des Kabelschutzrohres 10. Die Schraubhülsen 83 sind nunmehr festgezogen und haben über die Spannbügel 8 die äußeren Spannringe 6, 7 aufeinander zugeführt. Durch diesen Bewegungsvorgang sind die Innendruckringe ebenfalls aufeinander zugeführt worden und haben das gewickelte Dichtungsband dichtend zum Kabel verpreßt. Gleichzeitig ist der äußere flexible Dichtring 9 dichtend gegen die Innenwand des Schutzrohres 10 verpreßt worden. Das Ergebnis ist eine gas- und wasserdichte Abdichtung zwischen Kabel 1 und Kabelschutzrohr 10. Die Gegenstücke 82 liegen in der gezeigten Darstellung mit ihrem Überstand als Verschiebeanschlag an den zugeordneten Querschnittsflächen des Kabelschutzrohres 10 an.

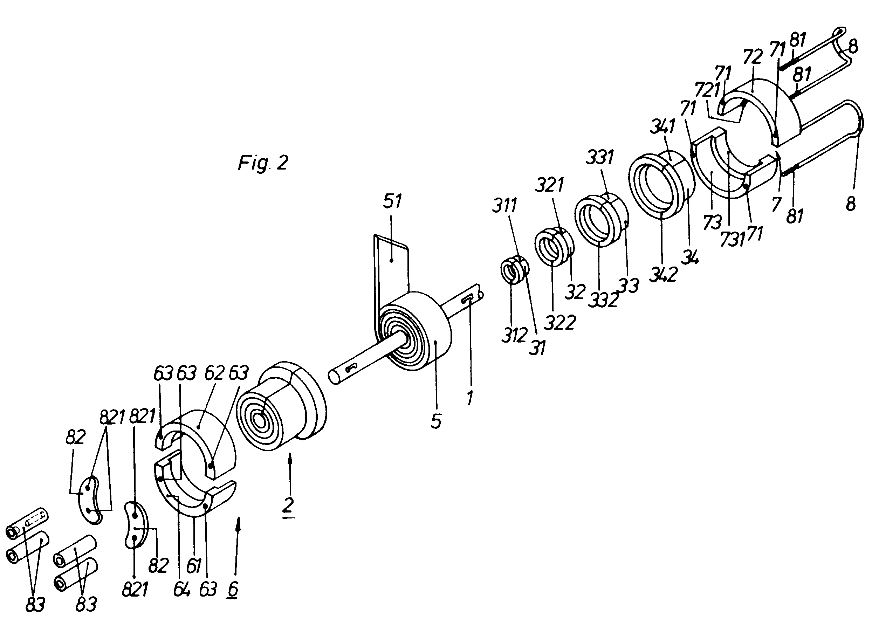

Fig. 2 zeigt in einer Explosionszeichnung die einzelnen Bestandteile des Dichtelementes. Über dem Kabel 1 ist das Dichtungsband 5 an der beabsichtigten Stelle der Abdichtung aufgewickelt und besitzt an seiner hochstehenden Fahne den schrägen Abschnitt 51.

Im rechten oberen Bereich der gezeigten Darstellung sind die einzelnen Innendruckringe 31, 32, 33, 34, dargestellt. Die Innendruckringe 31, 32, 33, 34, sind durch den Schlitz 311, 321, 331 und 341 teilbar gestaltet, wobei die den Ringen materialimmanent gegebene Elastizität ein Überdrücken über das Kabel 1 zuläßt. Die einzelnen Innendruckringe 31, 32, 33, 34 besitzen Umfangsbunde 312, 322, 332, 342, welche als Anschlagflächen beim Ineinanderschieben der einzelnen Innendruckringe 31, 32, 33, 34 ausgebildet sind.

Im folgenden zeigt die Darstellung den äußeren Spannring 7 mit seinen beiden Spannringhälften 72, 73. Die Spannringhälften 72, 73 besitzen jeweils eine Eindrehung 721, 731, die als Abstützflächen für den äußeren Innendruckring 24 ausgebildet sind. Die Durchgangsöffnungen 71 dienen zur Aufnahme der Spannbügel 8. Die Spannbügel 8 besitzen an ihren freien Ende die Gewindebereiche 81.

Im unteren Bereich der Darstellung sind die zusammengesetzten Innendruckringe 2 als Einheit dargestellt. Der äußere Spannring 6 ist mit seinen Spannringhälften 61, 62, entsprechend der oberen Bilddarstellung gezeigt. Zusätzlich dazu ergeben sich die beiden Gegenstücke 82 mit ihren Durchgriffsöffnungen 821 für die Spannbügel 8. Schließlich sind noch die Schraubhülsen 83 gezeigt, die im Endsitz auf die Gewindebereiche 81 der Spannbügel 8 aufgeschraubt sind.

## Patentansprüche

1. Vorrichtung für den druckdichten Abschluß der Mündung eines Hohlkörpers, vorzugsweise eines Kabelschutzrohres (10) mit einem zylindrischen, in die Rohrmündung einsetzbaren Dichtungsteil aus elastischem Werkstoff, wobei das Dichtungsteil wenigstens eine Durchgangsöffnung und einen bis zu dieser Durchgangsöffnung verlaufenden Einschnitt für das Einsetzen und die Aufnahme eines Kabels (1) aufweist, und wobei an beiden Stirnseiten des Dichtungsteils Druckplatten angeordnet sind, welche über Andrückelemente das Dichtungsteil nach außen zur Innenwand des Rohres (10) und nach Innen zur Überfläche des Kabels (1) verpressen, dadurch gekennzeichnet, daß das Dichtungsteil aus einer Anzahl ineinandersteckbarer, gegenseitig abgestützter Innendruckringe (2, 3) besteht, welche beidseitig eines Dichtelementes (5) auf dem Kabel (1) angeordnet sind, und daß die Innendruckringe (2, 3) von jeweils einem äußeren Spannring (6, 7) umgeben sind, welche ihrerseits aus je zwei Spannringhälften (61, 62, 72, 73) mit Durchgangsöffnungen (63, 71) für Befestigungselemente (8) bestehen.

2. Vorrichtung nach Anspruch 1, dadurch gekennzeichnet, daß das Dichtelement aus einem gewickelten Dichtungsband (5) aus elastischem und/oder plastischem Material besteht, welches nach außen von einem geteilten, flexiblen Dichtring (9) mit innenliegenden Einkerbungen (91) für die Befestigungselemente (8) abgedeckt ist.

3. Vorrichtung nach Anspruch 1, dadurch gekennzeichnet, daß die Innendruckringe (2, 3) aus geschlitzten Hülsen bestehen, welche in vorgegebenen Durchmesserabstufungen ineinanderstecken, und daß die einzelnen Durchmesserabstufungen jeweils einen bundartig umlaufenden Überstand zur Abstützung der einzelnen Hülsen im Hülsenverbund aufweisen.

4. Vorrichtung nach Anspruch 1, dadurch gekennzeichnet, daß die äußeren Spannringe (6, 7) eine umlaufende Eindrehung (64, 731) zur abstützenden Aufnahme des bundartigen Überstandes des äußeren Innendruckringes aufweisen.

5. Vorrichtung nach Anspruch 1, dadurch gekennzeichnet, daß die Befestigungselemente (8) an ihren freien Enden Gewindebereiche (81) aufweisen, auf die nach dem Durchgriff durch die Durchgangsöffnungen (63, 71) der äußeren Spannringe (6, 7) und dem Durchgreifen durch die Öffnungen (821) zweier Gegenstücke (82) Schraubhülsen (83 zur Erzeugung der Anpreßkraft aufbringbar sind.

6. Vorrichtung nach Anspruch 5, dadurch gekennzeichnet, daß die Gegenstücke (82) als Anschlagelemente für den Rohrwandquerschnitt mit einem Überstand über den Durchmesser der äußeren Spannringe (6, 7 ) ausgebildet sind.

## Claims

1. Device for the pressure-tight sealing of the end of a hollow body, preferably a cable conduct (cable protection tube) with a cylindrical sealing element made from an elastic material which can be inserted into the end of the tube, whereby the sealing element exhibits at least one through bore and a recess extending up to this through bore for inserting and holding a cable, and whereby pressure plates having thrust elements which press the sealing elements outwards against the inner wall of the tube and inwards against the surface of the cable are located on both end faces of the sealing element, characterised in that the sealing element comprises a number of interlinkable, mutually supported inner pressure rings (2, 3) positioned on either side of a sealing element (5) on the cable (1), and that the inner pressure rings (2, 3) are each surrounded by an outer clamping ring (6, 7), each of which consists in turn of two clamping ring halves (61, 62, 72, 73) with through bores (63, 71) for mounting elements (8).

2. Device in accordance with Claim 1, characterised in that the sealing element consists of a wound sealing tape (5) of elastic and/or plastic material which is covered on the outside by a split flexible seal ring (9) with notches (91) on the inside for the mounting elements (8).

3. Device in accordance with Claim 1, characterised in that the inner pressure rings (2, 3) consist of slotted sleeves in given diameter steps which can be plugged into one another, and that the individual diameter steps each exhibit a collar-like overhang to the support of the individual sleeves in the sleeve combination.

4. Device in accordance with Claim 1, characterised in that the outer clamping rings (6, 7) exhibit a continuous turned groove (64, 731) to support and hold the collar-like overhang of the outermost inner pressure ring.

5. Device in accordance with Claim 1, characterised in that the free ends of the mounting elements (8) exhibit threaded areas (81) onto which threaded sleeves (83) can be screwed to generate the compressive force after passing through the through bores (63, 71) of the outer clamping rings (6, 7) and through the bores (821) of two mating elements (82).

6. Device in accordance with Claim 5, characterised in that the mating elements (82) are designed as stop elements for the tube wall cross-section with an overhang over the diameter of the outer clamping rings (6, 7).

## Revendications

1. Dispositif de fermeture étanche à la pression de l'embouchure d'un corps creux, de préférence d'un tube de protection de câble avec un élément d'étanchéité cylindrique en matériau élastique s'enfonçant dans l'ouverture; l'élément d'étanchéité présente au moins une ouverture débouchante et une entaille se prolongeant jusqu'à cette ouverture pour la mise en place et la réception d'un câble, et des plaques de pression sont disposées aux deux faces avant de l'élément d'étanchéité qui compriment par des éléments de serrage l'élément d'étanchéité vers l'extérieur contre la paroi intérieure du tube et vers l'intérieur contre la surface du câble; le dispositif est caractérisé par le fait que l'élément d'étanchéité est constitué de plusieurs bagues de pression internes (2, 3) emboîtables, s'appuyant les unes sur les autres, qui sont disposés des deux côtés d'un élément d'étanchéité (5) sur le câble (1) et que les bagues de pression internes (2, 3) sont entourées chacune d'une bague élastique (6, 7), elle même constituée de deux moitiés de bagues élastiques (61, 62, 72, 73) avec des ouvertures débouchantes (63, 71) pour des éléments de fixation (8).

2. Dispositif selon la revendication 1, caractérisé par le fait que l'élément d'étanchéité est constitué d'une bande d'étanchéité enroulée (5) en matériau élastique et/ou en matière plastique, recouverte vers l'extérieur par une bague d'étanchéité flexible partagée (9) avec des entailles intérieures (91) pour les éléments de fixation (8).

3. Dispositif selon la revendication 1, caractérisé par le fait que les bagues de pression internes (2, 3) sont constituées de douilles fendues, emboîtées les unes dans les autres avec des paliers de diamètres prédéfinis et que les différents paliers de diamètres présentent chacun un collet périphérique supportant les différentes douilles de l'ensemble.

4. Dispositif selon la revendication 1, caractérisé par le fait que les bagues élastiques extérieures (6, 7) présentent une gorge tournée (64, 731) supportant le collet de la bague élastique interne.

5. Dispositif selon la revendication 1, caractérisé par le fait que les éléments de fixation (8) présentent des zones filetées (81) à leurs extrémités libres sur lesquelles peuvent être vissées des douilles filetées (83) pour générer la force de serrage après le passage au travers des ouvertures (63, 71) des bagues élastiques extérieures (6, 7) et le passage au travers des ouvertures (821) de deux pièces opposées (82).

6. Dispositif selon la revendication 5, caractérisé par le fait que les pièces opposées (82) sont conçues comme des éléments de butée pour la section de paroi du tube avec un épaulement par dessus le diamètre des bagues élastiques extérieures (6, 7).
